# EUROPÄISCHE PATENTSCHRIFT

(11) **EP 0 606 084 B1**
(45) Veröffentlichungstag und Bekanntmachung des Hinweises auf die Patenterteilung: **12.06.1996**
(21) Anmeldenummer: 94100141.4
(22) Anmeldetag: 28.03.1992
(51) Int. Cl.: B27K 3/50, B27K 3/52

(54) **Holzschutzmittel**
Wood preservative ayent
Agent préservatif du bois

(30) Priorität: 18.04.1991 DE 4112652
(43) Veröffentlichungstag der Anmeldung: 13.07.1994
(62) Teilanmeldung aus: 92105416.9
(73) Patentinhaber: Dr. Wolman GmbH, D-76547 Sinzheim (DE)
(72) Erfinder: Goettsche, Reimer, Dr., D-75632 Baden-Baden (DE); Borck, Hans-Volker, D-76534 Baden-Baden (DE)
(74) Vertreter: Karau, Wolfgang, Dr.

(56) Entgegenhaltungen:
- EP-A- 0 109 354
- EP-A- 0 238 051
- EP-A- 0 252 366
- EP-A- 0 278 641
- WO-A-82/03817
- FR-A- 2 227 103
- US-A- 3 625 738

## Beschreibung

Holzschutzmittel auf der Basis anorganischer Kupferverbindungen mit Alkanolaminen als Komplexbildner sind bekannt (EP-A-89 958). Die Wirksamkeit dieser Mittel gegenüber holzzerstörenden Basidiomyceten reicht trotz hoher Kupfergehalte im Vergleich zu bekannten kupfer- und chromathaltigen Salzen mit vergleichbarem Kupfergehalt nicht aus.

Es wurde jetzt gefunden, daß Holzschutzmittel auf der Basis von Kupferverbindungen und Alkanolaminen, die eine Phosphoniumverbindung enthalten, eine sehr gute Wirksamkeit gegenüber holzzerstörenden Basidiomyceten besitzen.

Durch Zugabe von geringen Mengen an organischen Lösungsmitteln zum Holzschutzmittel, z.B. Alkoholen (Ethanol, Isopropanol), Glykolen (Ethylenglykol, Propylenglykol), Glykolethern (Ethylenglykolmonomethylether, Ethylenglykolmonoethylether), Glykoletherestern (Butylglykolacetat), Dimethylformamid, N-Methylpyrrolidon können homogene Konzentrate erhalten werden. Bei der zusätzlichen Verwendung von Arylcarbonsäuren, Cycloalkylcarbonsäuren oder aliphatischen C₅-C₂₀-Mono- oder Dicarbonsäuren oder entsprechenden Amin-, Alkali- oder Kupfersalzen kann der Einsatz an Lösungsmitteln jedoch auf ein Minimum reduziert werden, um homogene Konzentrate zu erhalten.

Die Kupferverbindungen können als wasserlösliche oder wasserunlösliche Verbindungen eingesetzt werden, z.B. Kupfersulfat, Kupferacetat, Kupferhydroxid, Kupferoxid, Kupferborat, Kupferfluorid, Kupferhydroxidcarbonat.

Ein Alkanolamin ist insbesondere Monoethanolamin; der Einsatz von anderen Alkanolaminen z.B. Isopropanolamin, 1,1-, 1,2-Diaminoethanol, Aminoethylethanolamin, Diethanolamin, Triethanolamin, Methylethanolamin ist möglich.

Hierbei wird die Menge der zugesetzten Alkanolamine vorteilhaft so bemessen, daß sich in der verdünnten wäßrigen Imprägnierlösung ein pH-Wert von 7 oder mehr, vorzugsweise 8,5 bis 10,5, einstellt. Die Menge der Amine soll zur Komplexbildung des Kupfers ausreichen (1-g-Atom Kupfer benötigt ca. 4 mol Äquivalente Amin).

Als Phosphoniumverbindungen eignen sich besonders Verbindungen der Formel

R¹₃R²P⊕Y⊖,

in der
- R¹: einen Alkylrest mit 1 bis 6 Kohlenstoffatomen, einen Hydroxyalkylrest mit 1 bis 6 Kohlenstoffatomen oder einen Phenylrest,
- R²: einen Alkylrest mit 8 bis 18 Kohlenstoffatomen und
- Y: einen Säurerest, insbesondere ein Halogenidanion,
bedeutet.

Die Reste R¹ und R² sind vorzugsweise geradkettig.

Die quaternären Phosphoniumverbindungen können in den neuen Konzentraten einzeln oder als Gemische vorhanden sein. Beispiele für derartige Phosphoniumverbindungen sind Trimethyl-n-dodecyl-phosphoniumchlorid, Triethyl-n-decylphosphoniumbromid, Tri-n-propyl-n-tetradecylphosphoniumchlorid, Trimethylol-n-hexadecylphosphoniumchlorid, Tri-n-butyl-n-tetradecylphosphoniumchlorid, Tri-n-butyl-n-dodecylphosphoniumbromid, Tri-n-butyl-n-decylphosphoniumchlorid, Tri-n-butyl-n-hexadecylphosphoniumbromid, Tri-n-hexyl-n-decylphosphoniumchlorid, Triphenyl-n-dodecylphosphoniumchlorid, Triphenyl-n-tetradecylphosphoniumbromid, Triphenyl-n-octadecyl-phosphoniumchlorid.

Aliphatische Carbonsäuren können zur Verbesserung der Homogenität der Konzentrate zugesetzt werden. Solche Säuren sind z.B. Propionsäure, Hexansäure, Heptansäure, verzweigte Carbonsäuren wie z.B. 2-Ethylhexansäure, Isooctansäure, Neocarbonsäuren, aliphatische Dicarbonsäuren wie z.B. Sebacinsäure, Cycloalkylcarbonsäuren wie z.B. Cyclohexansäure, Arylcarbonsäuren wie z.B. Benzoesäure, 3- oder 4-Hydroxybenzoesäure.

Bei Verwendung der obengenannten Säuren ist es teilweise von Vorteil, durch Zusatz von komplexbildenden, polymeren Stickstoffverbindungen wie z.B. Polyethyleniminen die Holzschutzmitteleindringung bei großtechnischen Verfahren zu verbessern.

Polyethylenimine (PEI, Polymin) sind bekannt und entstehen durch Polymerisation von 1,2-Ethylenimin. In ihnen liegt der Stickstoff primär (Endgruppe), sekundär und tertiär (Verzweigung) vor. Geeignet sind Polyethylenimine mit n gröper als 10; sehr gute Ergebnisse werden erzielt bei Verwendung von PEI mit einem Polymerisationsgrad n zwischen 50 und 1 000.

Die Holzschutzmittel können gegebenenfalls weitere Verbindungen, z.B. Verbindungen mit einem fungiziden Anion wie beispielsweise eine Borverbindung (z.B. Alkaliborat, Aminborat, Borsäure, Borsäureester), Fluoride (z.B. Kaliumfluorid und/oder Salze der Fluoroborsäure und/oder Fluorophosphorsäure und/oder Difluorophosphorsäure), enthalten.

Durch den Zusatz weiterer Wirkstoffe kann die Wirkungsbreite der erfindungsgemäßen Holzschutzmittel gegebenenfalls verbessert werden. Geeignete Verbindungen sind z.B. N-Organodiazeniumdioxyverbindungen, Organozinnverbindungen, besonders Tributyl(TBT)zinnverbindungen, Isothiazolinverbindungen der folgenden Formel 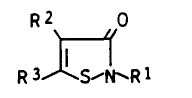
- R¹: ist Wasserstoff, ein Alkyl-, Alkenyl-, Alkinylrest mit 1 bis 18 Kohlenstoffatomen, Cycloalkylrest mit einem C₃- bis C₆-Ring und mit bis zu 12 Kohlenstoffatomen, einem Aralkyl- oder Arylrest mit bis zu 19 Kohlenstoffatomen
- R², R³: unabhängig voneinander Wasserstoff-, Halogen- oder C₁- bis C₄-Alkylrest bzw. R² und R³ Teil eines Aromatenrestes.

Auch ein Zusatz weiterer Fungizide oder Insektizide ist möglich, z.B. in emulgierter Form, wie
N-Tridecyl-2,6-dimethylmorpholin (Tridemorph) und/oder
4-(3-para-tertiär-butylphenyl)2-methyl-propyl-2,6-cis-dimethylmorpholin (Fenpropimorph) und/oder
chlorierte Phenole
Tetrachlorisophthalsäure-dinitril
N-Cyclohexyl-N-methoxy-2,5-dimethyl-furan-3-carbonsäureamid
N-Dimethyl-N'-phenyl-(N-fluormethylthio)-sulfamid
N,N-Dimethyl-N'-toluyl-(N-fluormethylthio)-sulfamid
Benzimidazol-2-carbaminsäure-methylester
2-Thiocyanomethyl-thiobenzothiazol
2-Iodbenzoesäureanilid
1-(1',2',4'-Triazolyl-1')-(1-(4'-chlorphenoxy)-3,3-dimethylbutan-2-on
1-(1',2',4'-Triazolyl-1')-(1-(4'-chlorphenoxy)-3,3-dimethylbutan-2-ol
Hexachlorcyclohexan
0,0-Diethyl-dithio-phosphoryl-methyl-6-chlorbenoxazolon
2-(1,3-Thiazol-4-yl)-benzimidazol
N-Trichlormethylthio-3,6,7,8-tetrahydrophthalimid
N-(1,1,2,2-Tetrachlorethylthio)-3,6,7,8-tetrahydrophthalimid
N-Trichlormethylthiophthalimid
3-Iodo-2-propylbutylcarbamat
0,0-Dimethyl-S-(2-methylamino-2-oxoethyl)-dithiophosphat
0,0-Dimethyl-0-(3,5,6-trichlor-2-pyridyl)-thiophosphat
0,0-Dimethyl-S-(N-phthalimido)-methyldithiophosphat
0,0-Diethyl-0-(α-cyanbenzyliden-amino)-thiophosphat
6,7,8,9,10-Hexachlor,1,5,5a,6,9,9a-hexahydro-6,9-methano-2,3,4-benzoedioxothiepien-3-oxid
(4-Ethoxyphenyl)-(dimethyl)-(3-(4-fluoro-3-phenoxy-phenyl)-propyl-silane
2-sek.-Butyl-phenyl-N-methylcarbamat
2-l-Propoxyphenyl-N-methyl-carbamat
N-Methyl-1-naphthyl-carbamat
Norbonen-dimethanohexa-chlorcyclosulfit
1-(4-Chlorphenyl)-3-(2,6-di-fluorbenzoyl)-harnstoff
synthetische Pyrethroide, wie
(+)-3-(2,2-Dichlorvinyl-2,2-dimethyl)-cyclopropan-1-carbonsäure-3-phenoxybenzylester
3-(2,2-Dichlorvinyl-2,2-dimethyl)-cyclopropan-1-carbonsäure-α-Cyano-3,3-phenoxybenzylester
3-(2,2-Dibromvinyl-2,2-dimethyl)-α-cyano-m-phenoxybenzyl-1R,3R)-cyclopropancarboxylat (Deltamethrin)
α-Cyano-3-phenoxybenzyl-isopropyl-2,4-chlorphenylacetat.

Die wasserverdünnbaren Holzschutzmittel enthalten - in konzentrierter Form - das Kupfer berechnet als Metall im allgemeinen, z.B. in einer Menge von 1,0 bis 15,0 % (Gewichtsprozent).

Geeignete Konzentrate bestehen z.B. aus
2,50 bis 45 %, insbesondere 10 bis 20 %, Kupferverbindungen
5,00 bis 50 %, insbesondere 20 bis 40 %, Alkanolamin
0,25 bis 15 %, insbesondere 1 bis 10 %, Triazolverbindungen
2,50 bis 40 %, insbesondere 10 bis 20 %, Phosphoniumverbindungen
0,5 bis 30 %, insbesondere 5 bis 15 %, eines Emulgators
0 bis 40 % Verbindung mit einem fungiziden anorganischen oder organischen Anion
0 bis 40 % organische Lösungsmittel
0 bis 40 % einer aliphatischen Mono- oder Dicarbonsäure und/oder Cycloalkylcarbonsäure und/oder Cycloarylcarbonsäure
0 bis 15 % einer komplexbildenden, polymeren Stickstoffverbindung,
wobei die Summe jeweils 100 Gew.-% ergibt, sowie gegebenenfalls untergeordnete Mengen an anderen Bestandteilen, wie z.B. Ammoniak, Korrosionsinhibitoren, komplexbildenden Säuren (z.B. Nitrilotriessigsäure, Ethylendiamintetraessigsäure bei Verwendung von Wasser mit höheren Härtegraden) und erforderlichenfalls Wasser, dessen Anteil jedoch im allgemeinen gering gehalten werden kann und das im wesentlichen der Handhabung dient.

Die Erfindung erstreckt sich jedoch neben den Holzschutzmitteln (Konzentrate) gleichermapen auch auf die durch Verdünnung der Konzentrate mit Wasser herstellbaren Imprägnierlösungen entsprechend geringerer Einzelkonzentration. Die Anwendungskonzentration beträgt z.B. 0,01 bis 1,50 Gew.-% Metall, z.B. Kupfer, in der wäprigen Imprägnierlösung, je nach Art der Imprägnierung und des Gefährdungsgrades des zu imprägnierenden Holzes.

Durch Auflösen der Kupfersalze, gegebenenfalls unter Wärmezufuhr, in den Alkanolaminen, gegebenenfalls unter Säure-, Wasser- oder Lösungsmittelzugabe und anschließender Zugabe der Phosphoniumverbindungen entstehen hochkonzentrierte Pasten, flüssige Konzentrate oder auch Zwei-Phasen-Mischungen, die nach dem Verdünnen mit Wasser zum Imprägnieren von Holz verwendet werden können. Sie ergeben auch bei hoher Konzentration in Wasser eine klare Flüssigkeit.

Die Anwendung der Imprägnierlösung zum Schutz von Holz kann durch handwerkliche Verfahren wie Sprühen, Streichen, Tauchen, Trogtränken oder durch großtechnische Verfahren wie Kesseldruckverfahren, Wechseldruckverfahren, Doppelvakuumverfahren erfolgen. Unter "Holz" sind sowohl massives Holz als auch Holzwerkstoffe wie Spanplatten, Sperrholz zu verstehen; hier kann gegebenenfalls das Holzschutzmittel auch im Leimuntermischverfahren eingebracht werden.

Die Kupferfixierung der erfindungsgemäßen Holzschutzmittel ist hoch, bei Einsatz für großtechnische Verfahren liegt sie bei mehr als 90 %.

Die Konzentrate oder Lösungen können durch wasserlösliche oder in Wasser emulgierbare Farbstoffe und/oder Pigmentpräparationen eingefärbt werden.

Eine Zugabe von Wachs-, Paraffin- und/oder Acrylatdispersionen zur Erzielung einer wasserabweisenden Wirkung oder Verbesserung der Fixierung ist möglich.

Die Konzentrate können gegebenenfalls auch in bindemittelenthaltende wasserverdünnbare Systeme (Grundierungen, Lasuren) eingearbeitet werden.

Die folgenden Beispiele erläutern die Erfindung.

Grenzwertbestimmung der Wirkung gegen holzzerstörende Pilze.

Das Verfahren dient zur Bestimmung der vorbeugenden Wirkung von Holzschutzmitteln gegen holzzerstörende Pilze.

Gleichartige, bei 103°C bis zur Gewichtskonstanz getrocknete Holzklötzchen-(5 x 2,5 x 1,5 cm) werden mit abgestuften Mengen des zu prüfenden Holzschutzmittels vollgetränkt, getrocknet, mit Wasser ausgewaschen (Auswaschung der Wirkstoffmischung aus dem Holz) und in Glasschalen dem Angriff von Kulturen holzzerstörender Pilze ausgesetzt. Als Nährboden für die Pilze dient Malzagar (enthaltend 4 % Malzextrakt). Die durch den Pilz-befall bewirkte Zerstörung des Holzes wird durch den Gewichtsverlust der Probehölzer erfaßt; ein Gewichtsverlust von 2 % und mehr wird als Holzzerstörung gewertet.

Angegeben wird eine untere Wirkstoffkonzentration, bei der das Holz gerade beginnt zerstört zu werden, und eine obere Wirkstoffkonzentration, bei der keine Holzzerstörung zu erkennen ist, somit ein vollständiger Holzschutz erreicht ist. Für die Bewertung eines Holzschutzmittels in der Praxis ist immer von der oberen Wirkstoffkonzentration auszugehen.

Grenzwertbestimmung der Wirkung gegen holzzerstörende Pilze (in Kg Wirkstoff oder Mischung der Wirkstoffe je m³ Holz).

Das Ergebnis ist wie folgt zu verstehen. Je geringer der Grenzwert ist, desto besser ist die fungizide Wirkung. 1 kg/m³ ist also besser als 2 kg/m³.

### Beispiel A (nicht erfindungsgemäß)

20 Gew.% Cu(OH)₂CuCO₃
45 Gew.% Monoethanolamin
10 Gew.% Borsäure
25 Gew.% Wasser
Grenzwerte gegenüber den holzzerstörenden Basidiomyceten Coniophora puteana, Poria placenta mehr als 35 kg/m³.

### Beispiel B (nicht erfindungsgemäß)

17,5 % Cu(OH)₂ · CuCO₃
42 % Monoethanolamin
30 % Borsäure
10,5 % Wasser
Grenzwerte gegenüber Coniophora puteana, Poria placenta mehr als 35 kg/m³.

### Beispiel C (nicht erfindungsgemäß)

### n-Tributyl-tetradecyl-phosphoniumchlorid 50 % (handelsüblich) gelöst in Wasser

### Grenzwerte

| | |
|---|---|
| Coniophora puteana | 7,7 bis 12,3 kg/m³ |
| Poria placenta | 4,7 bis 7,3 kg/m³ |

### Beispiel

13 % Cu(OH)₂CuCO₃
31 % Monoethanolamin
20 % Benzoesäure
23 % Wasser
13 % Tri-n-butyl-tetradecyl-phosphoniumchlorid

### Grenzwerte

| | |
|---|---|
| Coniophora puteana | 11,4 bis 18,3 kg/m³ |
| Poria placenta | 11,5 bis 18,1 kg/m³ |

## Patentansprüche

1. Holzschutzmittel enthaltend eine Kupferverbindung und ein Alkanolamin, dadurch gekennzeichnet, daß es zusätzlich eine Phosphoniumverbindung enthält.

2. Verfahren zum Schutz von Holz, dadurch gekennzeichnet, daß man das Holz mit einer wirksamen Menge eines Holzschutzmittels gemäß Anspruch 1 behandelt.

3. Imprägnierlösung zum Imprägnieren von Holz zum Schutz gegen Pilze enthaltend ein Holzschutzmittel gemäß Anspruch 1 und zusätzlich Wasser.

4. Verfahren zum Imprägnieren von Holz, dadurch gekennzeichnet, daß man ein Holzschutzmittel gemäß Anspruch 1 mit Wasser verdünnt und das Holz mit einer wirksamen Menge der wäßrigen Verdünnung behandelt.

## Claims

1. A wood preservative comprising a copper compound and an alkanolamine, which preservative additionally comprises a phosphonium compound.

2. A method of preserving wood, which comprises treating the wood with an effective amount of a wood preservative as claimed in claim 1.

3. An impregnating solution for impregnating wood for protection against fungi, comprising a wood preservative as claimed in claim 1 and additionally water.

4. A method of impregnating wood, which comprises diluting a wood preservative as claimed in claim 1 with water and treating the wood with an effective amount of the aqueous dilution.

## Revendications

1. Agent de protection du bois contenant un composé cuivrique et une alcanolamine, caractérisé par le fait qu'il contient en outre un composé de phosphonium.

2. Procédé de protection du bois, caractérisé par le fait que l'on traite le bois avec une quantité efficace d'un agent de protection du bois selon la revendication 1.

3. Solution d'imprégnation pour imprégner le bois en vue de sa protection contre les champignons contenant un agent de protection du bois selon la revendication 1 et de l'eau additionnelle.

4. Procédé pour imprégner du bois, caractérisé par le fait que l'on dilue avec de l'eau un agent de protection du bois selon la revendication 1 et qu'on traite le bois avec une quantité efficace de la dilution aqueuse.
